(19) Europäisches Patentamt / European Patent Office / Office européen des brevets

(11) **EP 2 536 045 A1**

(12) **EUROPEAN PATENT APPLICATION**
published in accordance with Art. 153(4) EPC

(43) Date of publication:
**19.12.2012 Bulletin 2012/51**

(51) Int Cl.:
*H04J 11/00* (2006.01)  *H04L 27/01* (2006.01)

(21) Application number: **10845816.7**

(22) Date of filing: **20.12.2010**

(86) International application number:
**PCT/JP2010/072934**

(87) International publication number:
**WO 2011/099226 (18.08.2011 Gazette 2011/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2010 JP 2010028130**

(71) Applicant: **Sharp Kabushiki Kaisha**
**Osaka-shi, Osaka 545-8522 (JP)**

(72) Inventors:
• **YOKOMAKURA Kazunari**
**Osaka 545-8522 (JP)**
• **HAMAGUCHI, Yasuhiro**
**Osaka 545-8522 (JP)**
• **NAKAMURA, Osamu**
**Osaka 545-8522 (JP)**
• **GOTO, Jungo**
**Osaka 545-8522 (JP)**
• **TAKAHASHI, Hiroki**
**Osaka 545-8522 (JP)**

(74) Representative: **Müller - Hoffmann & Partner Patentanwälte**
**Innere Wiener Strasse 17**
**81667 München (DE)**

(54) **RADIO TRANSMITTER APPARATUS, BASE STATION APPARATUS, RADIO TRANSMITTING METHOD, BASE STATION APPARATUS CONTROL PROGRAM, AND INTEGRATED CIRCUIT**

(57) In using frequency selective precoding to a multicarrier signal, notification is provided with a small amount of control information. A radio transmitter, which divides a frequency signal into a plurality of clusters, arranges each of the divided clusters on a frequency domain and multiplies each of the clusters arranged on the frequency domain by a precoding matrix, limits the number of precoding matrices to be selected based on the relationship between a precoding matrix to be multiplied to any of the clusters and a precoding matrix to be multiplied to any of the other clusters. Further, the number of precoding matrices to be selected is limited based on the relationship between a precoding matrix to be multiplied to any one of the clusters and a precoding matrix to be multiplied to another cluster neighboring thereto. Furthermore, the number of precoding matrices to be selected is limited based on frequency correlation between any one of the clusters and another cluster neighboring thereto.

*FIG.1*

EP 2 536 045 A1

**Description**

Technical Field

The present invention relates to a radio transmitter, a base station apparatus, a radio transmission method, a control program for the base station apparatus, and an integrated circuit, which divide a frequency signal into a plurality of clusters, arrange each of the divided clusters on a frequency domain and multiply each of the clusters arranged on the frequency domain by a precoding matrix.

Background Art

Standardization of LTE (Long Term Evolution) system, which is a radio communication system of a 3.9th generation mobile phone have been completed mostly, and, currently, LTE-A (also referred to as LTE-Advanced, or IMT-A, etc.), which is a 4th generation radio communication system made by evolving the LTE system, is under standardization. Generally, in an uplink (communication from a mobile station to a base station) of a mobile communication system, where the mobile station is a transmission station, a low peak power single carrier system capable of maintaining a high power use efficiency of an amplifier in a limited transmit power (SC-FDMA (Single Carrier Frequency Division Multiple Access) system is adopted in LTE) is regarded as an effective one. SC-FDMA is also referred to as DFT-S-OFDM (Discrete Fourier Transform Spread Orthogonal Frequency Division Multiplexing), or DFT-precoded OFDM, etc.

In LTE-A, in order to improve spectrum efficiency further, for terminals with a sufficient transmit power, it is determined to newly support an access system (also referred to as Clustered DFT-S-OFDM (DSC: Dynamic Spectrum Control), or SC-ASA (Single Carrier Adaptive Spectrum Allocation) etc.), in which an SC-FDMA spectrum is divided into clusters each composed of a plurality of sub-carriers and each of the clusters is arranged to any frequency of a frequency domain. Furthermore, also aiming to significantly improve the peak transmission speed, it is also determined to introduce a multi-antenna technology for performing transmission using a plurality of transmission antennas. In LTE-A, closed loop precoding is mostly discussed in the multi-antenna technology.

Disclosure of the Invention

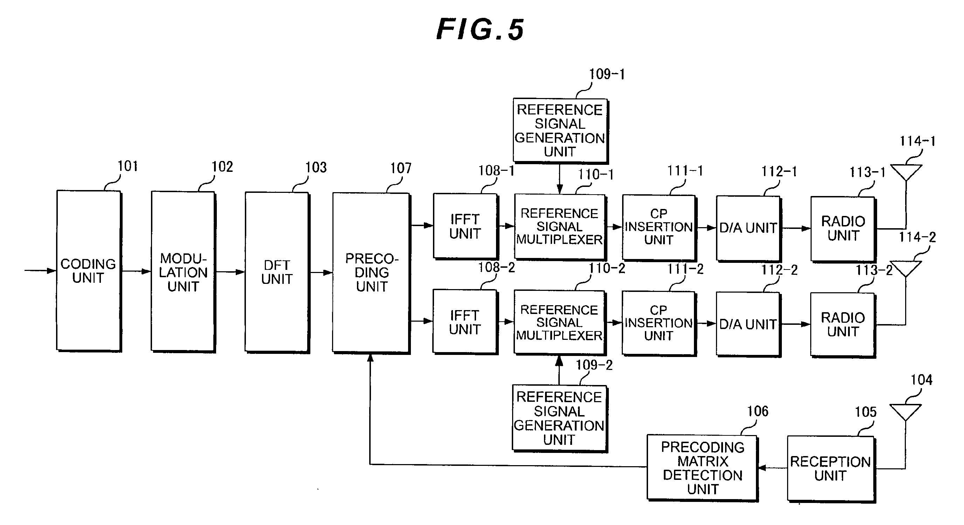

Fig. 5 is a block diagram showing an example of a configuration of a mobile station apparatus (radio transmitter) when closed loop precoding is used for an uplink. Here, a case, in which the number of transmitting antennas is two, will be described. In Fig. 5, a coding unit 101 converts an information bit into error-correcting coding, and the resultant sign bit is changed into a modulation signal, such as QPSK (Quaternary Phase Shift Keying) by a modulation unit 102. The modulation signal is changed into a frequency signal by a DTF unit 103, and input into a precoding unit 107.

On the other hand, a signal notified from a base station apparatus is received by a receiving antenna 104, and subjected to reception processing, such as downconverting into a baseband signal, and converting from an analog signal to a digital signal, by a reception unit 105, and a precoding matrix is detected by a precoding matrix detection unit 106. The detected precoding matrix is input into the precoding unit 107, where a data signal input from the DTF unit 103 is multiplied by the precoding matrix, and a frequency signal to be transmitted from each of the transmitting antennas is determined.

Since a precoding matrix is generally defined by a matrix of which size is (the number of transmitting antennas) x (the number of signals), the number of resultant signals multiplied by the precoding matrix is the number of the transmitting antennas. For example, if the number of the transmitting antennas is two, the number of the signals (rank) is one, and the precoding matrix is defined as $[1,-1]^T$ (T expresses transposition), a signal multiplied by one will be transmitted from a first antenna, and a signal multiplied by minus one will be transmitted from a second antenna. In the precoding unit 107, a signal is multiplied by a precoding matrix, and as shown in Non-Patent Document 2, for a continuous arrangement, a signal is multiplied by the same precoding matrix for every frequency, or for a disncontinuous arrangement, each cluster is multiplied by a precoding matrix.

The frequency signal of each transmitting antenna output from the precoding unit 107 is converted into time signals by IFFT units 108-1 and 108-2, respectively. The time signals are multiplexed with reference signals for channel estimation generated by reference signal generation units 109-1 and 109-2, respectively in reference signal multiplexers 110-1 and 110-2. Then, each signal is inserted with CP (Cyclic Prefix) by CP insertion units 111-1 and 111-2, converted into an analog signal by a D/A (Digital to Analog) unit 112-1, 112-2, and upconverted into a radio frequency by a radio unit 113-1, 113-2 to be transmitted from a transmitting antenna 114-1, 114-2.

Precoding matrices to be used for precoding processing are generally defined by a system. For example, in LTE-A, a precoding matrix achieving best characteristics is selected as PMI (Precoding Matrix Indicator) among selectable precoding matrices described in Non-Patent Document 1, and notified from the base station apparatus to the mobile station apparatus, and then the mobile station apparatus performs multiplication of the precoding matrix.

Furthermore, in Non-Patent Document 2, frequency selective precoding, in which for distributed arrangement of single carrier spectra, each cluster is subjected to different precoding processing, is proposed, and improvement of transmission performances is shown.

Non-Patent Document 1: 3GPP, TR36.814, vl.5.1, December in 2009
Non-Patent Document 2: Nakamura et al, "Consideration on frequency selective precoding in Clustered DFT-S-OFDM", TECHNICAL REPORT OF IEICE (THE INSTITUTE OF ELECTRONICS, INFORMATION AND COMMUNICATION ENGINEERS), RCS 2009, December in 2009

However, in a prior art, there is a problem that it is necessary to set a frequency precoding matrix for each cluster, and therefore the amount of control information of downlink (communication from a base station to a mobile station) will increase.

The present invention is made in view of such a circumstance, and its object is to provide a radio transmitter, a base station apparatus, a radio transmission method, a control program of the base station apparatus, and an integrated circuit, capable of performing notification using a small amount of control information in using frequency selective precoding to a multicarrier signal.

(1) In order to achieve the above-mentioned object, an embodiment of the present invention takes the following measures. That is, a radio transmitter according to the present invention is the one which divides a frequency signal into a plurality of clusters, arranges each of the divided clusters on a frequency domain and multiplies each of the clusters arranged on the frequency domain by a precoding matrix, wherein the number of precoding matrices to be selected is limited based on the relationship between a precoding matrix to be multiplied to any of the clusters and a precoding matrix to be multiplied to any of the other clusters.

In this manner, since the number of precoding matrices to be selected is limited based on the relationship between a precoding matrix to be multiplied to any of the clusters and a precoding matrix to be multiplied to any of the other clusters, frequency selective precoding can be applied using a small amount of control information, enabling to enhance the transmission efficiency.

(2) Further, in the radio transmitter according to an embodiment of the present invention, the number of precoding matrices to be selected is limited based on the relationship between a precoding matrix to be multiplied to any one of the clusters and a precoding matrix to be multiplied to another cluster neighboring thereto.

In this manner, since the number of precoding matrices to be selected is limited based on the relationship between a precoding matrix to be multiplied to any one of the clusters and a precoding matrix to be multiplied to another cluster neighboring thereto, frequency selective precoding can be applied using a small amount of control information, enabling to enhance the transmission efficiency.

(3) Further, in the radio transmitter according to an embodiment of the present invention, the number of precoding matrices to be selected is limited based on frequency correlation between any one of the clusters and another cluster neighboring thereto.

In this manner, since the number of precoding matrices to be selected is limited based on the frequency correlation between any one of the clusters and another cluster neighboring thereto, frequency selective precoding can be applied using a smaller amount of control information than the amount of control information when the number of precoding matrices is limited only based on the relationship between precoding matrices between clusters, enabling to enhance the transmission efficiency.

(4) Further, the radio transmitter according to an embodiment of the present invention is the one including a plurality of transmitting antennas, for performing frequency selective precoding to transmit a radio signal, wherein, the amount of information for notifying a destination of a precoding matrix multiplied to any one of clusters is made smaller than the amount of information for notifying the destination of a precoding matrix multiplied to any of the other clusters.

In this manner, since the amount of information for notifying a destination of a precoding matrix multiplied to any one of clusters is made smaller than the amount of information for notifying the destination of a precoding matrix multiplied to any of the other clusters, frequency selective precoding can be applied using a small amount of control information, enabling to enhance the transmission efficiency.

(5) Further, in the radio transmitter according to an embodiment of the present invention, the amount of information for notifying the destination of the precoding matrix is determined according to a chordal distance.

In this manner, since the amount of information for notifying the destination of the precoding matrix is determined according to the chordal distance, frequency selective precoding can be applied using a smaller amount of control information than the amount of control information when the number of precoding matrices is limited only based on the relationship between precoding matrices between clusters, enabling to enhance the transmission efficiency.

(6) Further, a base station apparatus according to an embodiment of the present invention includes the radio transmitter according to any of the above (1) to (5).

In this manner, since the base station apparatus includes the radio transmitter according to any of the above (1) to (5), frequency selective precoding can be applied using a small amount of control information, enabling to enhance the transmission efficiency.

(7) Further, a radio transmission method according to an embodiment of the present invention is the one which divides a frequency signal into a plurality of clusters, arranges each of the divided clusters on a frequency domain and multiplies each of the clusters arranged on the frequency domain by a precoding matrix, at least comprising the steps of specifying the relationship between a precoding matrix to be multiplied to any of the clusters and a precoding matrix to be multiplied to any of the other clusters and limiting the number of precoding matrices to be selected based on the relationship.

In this manner, since the radio transmission method includes specifying the relationship between a precoding matrix to be multiplied to any of the clusters and a precoding matrix to be multiplied to any of the other clusters and limiting the number of precoding matrices to be selected based on the relationship, frequency selective precoding can be applied using a small amount of control information, enabling to enhance the transmission efficiency.

(8) Further, a control program of a base station apparatus according to an embodiment of the present invention is the one which divides a frequency signal into a plurality of clusters, arranges each of the divided clusters on a frequency domain and multiplies each of the clusters arranged on the frequency domain by a precoding matrix, wherein the control program converts a series of processing into commands so as to enable a computer to read and execute them, the series of processing including processing of: specifying the relationship between a precoding matrix to be multiplied to any of the clusters and a precoding matrix to be multiplied to any of the other clusters; and limiting the number of precoding matrices to be selected based on the relationship.

In this manner, since the control program of the base station apparatus specifies the relationship between a precoding matrix to be multiplied to any of the clusters and a precoding matrix to be multiplied to any of the other clusters, and limits the number of precoding matrices to be selected based on the relationship, frequency selective precoding can be applied using a small amount of control information, enabling to enhance the transmission efficiency.

(9) Further, an integrated circuit according to an embodiment of the present invention is the one, when mounted on a radio transmitter, causing the radio transmitter to perform a plurality of functions, wherein the integrated circuit causing the radio transmitter to perform functions of: specifying the relationship between a precoding matrix to be multiplied to any of the clusters and a precoding matrix to be multiplied to any of the other clusters; and limiting the number of precoding matrices to be selected based on the relationship.

In this manner, since the integrated circuit specifies the relationship between a precoding matrix to be multiplied to any of the clusters and a precoding matrix to be multiplied to any of the other clusters, and limits the number of precoding matrices to be selected based on the relationship, frequency selective precoding can be applied using a small amount of control information, enabling to enhance the transmission efficiency.

According to the present invention, since frequency selective precoding can be applied using a small amount of control information, the transmission efficiency can be enhanced.

Brief Description of the Drawings

Fig. 1 is a block diagram illustrating one example of the configuration of a base station apparatus according to a first embodiment of the present invention;
Fig. 2 is a conceptual view representing the amount of information of a precoding matrix selected for each cluster;
Fig. 3 is a conceptual view representing the amount of information of a precoding matrix selected for each cluster in the first embodiment of the present invention;
Fig. 4 is a conceptual view illustrating one example in a second embodiment of the present invention, where the amount of information of a precoding matrix is reduced; and
Fig. 5 is a block diagram illustrating one example of the configuration of a mobile station apparatus (radio transmitter) in a case where closed loop precoding is used for an uplink.

Best Modes for Carrying Out the Invention

Hereinafter, with reference to drawings, embodiments for embodying the present invention will be described. In the following embodiments, it is assumed that frequency precoding is performed for Clustered DFT-S-OFDM, but, it is not limited to this. For example, it is also applicable to a transmission scheme, such as, a multicarrier system exemplified by OFDM, or MC-CDM (Multi-Carrier Code Division Multiplexing). Furthermore, although an example of application to an uplink will be described below, application to a downlink is also possible.

First Embodiment

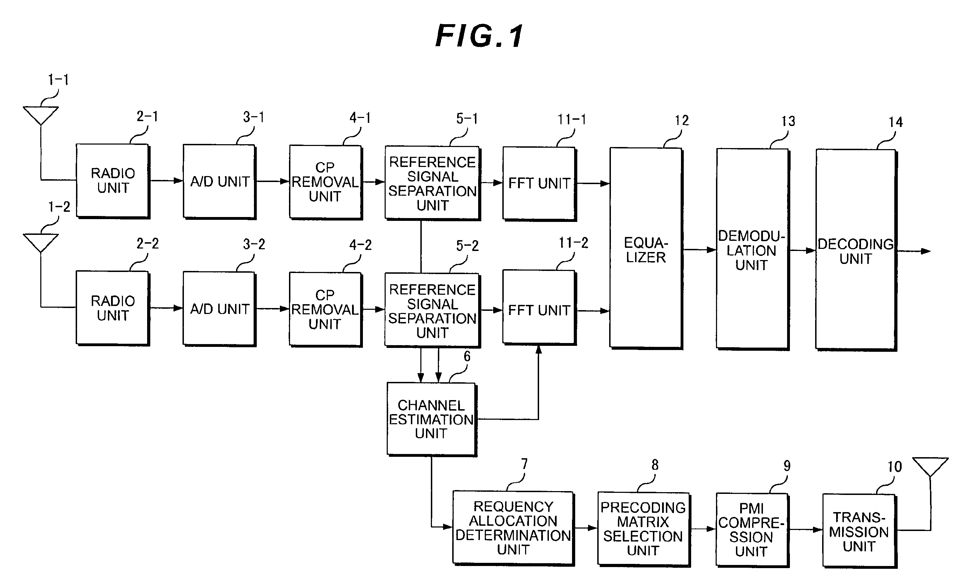

Fig. 1 is a block diagram illustrating one example of the configuration of a base station apparatus according to a first embodiment of the present invention. Here, it is determined that the number of receiving antennas is two and the number of layers is one. Basically, the number of the receiving antennas can be one, but, since a reception diversity technology etc. is generally applied for a base station apparatus, a case of two antennas is described here. First, a radio unit 2-1 (2-2) downconverts a signal received by a receiving antenna 1-1 (1-2) into a baseband signal. Then an A/D unit (Analog to Digital) 3-1 (3-2) converts the baseband signal into a digital signal, a CP removal unit 4-1 (4-2) removes CP from the digital signal, and a reference signal separation unit 5-1 (5-2) separates a reference signal for channel estimation from the received signal. A channel estimation unit 6 estimates channel frequency characteristics from the separated reference signal, and a frequency allocation determination unit 7 determines with which frequency communication is performed. This processing is referred to as scheduling.

For the obtained frequency allocation, a precoding matrix selection unit 8 calculates an optimum precoding matrix for each cluster, and a PMI compression unit 9 reduces the number of information bits of the precoding matrix selected for each cluster in a manner as described above. Finally, a transmission unit 10 performs transmission processing such as upconverting to a radio frequency, and the resultant signal is transmitted from a transmitting antenna.

On the other hand, an FFT unit 11-1 (11-2) converts the received signal from which the reference signal is separated into a frequency signal, and an equalizer 12 equalizes the signal distortion caused by composition throughout the receiving antenna and generated in the channel. After that, a demodulation unit 13 decomposes the equalized signal into a bit level, which is then subjected to error-correction decoding by a decoding unit 14.

Hereinafter, a case where the number of transmitting antennas is four and the number of layers is two, will be described. The reason of this is for the purpose of easy description, and thereby, the number of the transmitting antennas applicable to the present invention is not limited to four. Table 1 shows a table (codebook) of slectable precoding matrices exemplified in Non-Patent Document 1. In Non-Patent Document 1, when the number of transmitting antennas is four, it is determined to notify the number of layers (one to four layers) using six bits. Table 1 shows 24 kinds in case of one layer and 16 kinds in case of two layers, which are already determined to be used, and 24 kinds that are obtained by subtracting the number of the matrices in rank 1 and rank 2 from 64 kinds, which correspond to "26" represented by six bits, are being deliberated now as precoding matrices in rank 3.

Table 1

| | Codebook (Layer Number 1) | | | | | | | |
|---|---|---|---|---|---|---|---|---|
| Index 0-7 | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ |
| Index 8-15 | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ |
| Index 16-23 | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ |

In Table 1, the row element of each of the precoding matrices expresses a value to be multiplied to each of the transmitting antennas, and the column element of each precoding matrices expresses the index of each signal (referred to as a layer) to be spatial-multiplexed. Any one of the matrices is selected, and six bits are necessary for each cluster.

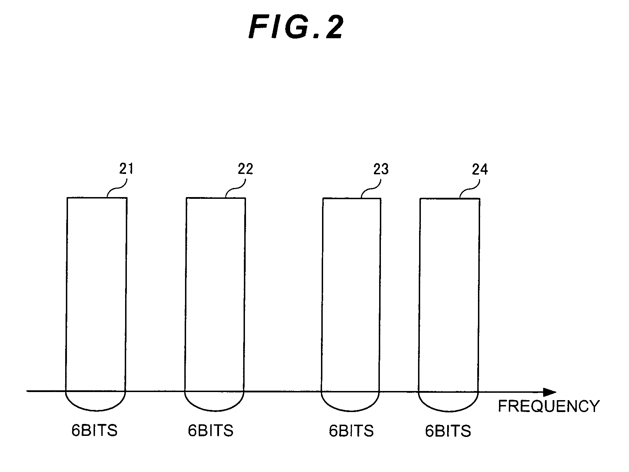

Fig. 2 is a conceptual view representing the amount of information of a precoding matrix selected for each cluster. In the figure, the horizontal axis expresses a frequency, and reference numerals 21 to 24 express respective clusters of a single carrier arranged in a distributed manner. For example, when the single carrier is divided into four clusters, as shown in the figure, six bits of information is required for each of the clusters 21 to 24, the amount of control information to be notified is 24 (6 x 4) bits. In the present invention, the amount of control information can be reduced by reducing the number of precoding matrices selectable among clusters.

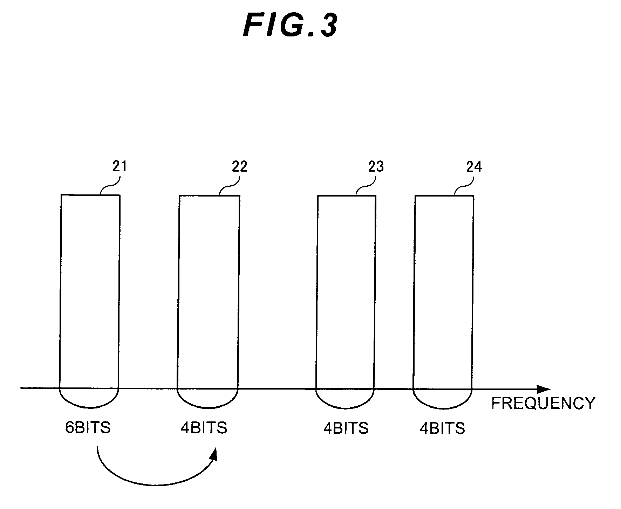

Fig. 3 is a conceptual view representing the amount of information of a precoding matrix selected for each cluster in the first embodiment of the present invention. First, the precoding matrix is set for any one of the clusters. At that time, as an example, it is assumed that codebook index 0 with one layer is designated. Next the precoding matrix for a neighboring cluster having a nearest frequency is set. Here, in setting the neighboring cluster, the number of selectable codebooks is only the number of codebook indexes 0 to 15 with one layer. This is based on that if the rank of one cluster is determined, precoding matrices in the other rank will not be selected. For this reason, it is meant that if the precoding matrix of one cluster is determined, selectable precoding matrices will be limited. As a result, by selecting from among 16 kinds of precoding matrices, the precoding matrix of the neighboring cluster can be set. Accordingly, in this example, when the precoding matrix of one cluster is set, the precoding matrices of the other clusters can be notified using four bits, and thereby, the total precoding matrices can be notified using 18 bits (6 + 4 x 3).

Similarly, a case where codebook index 16 with one layer is designated, is also considered. Since codebook index 16 with one layer is a matrix for causing signals from transmitting antennas 2 and 4 to be off the air, similar matrices are only four kinds of codebook indexes 16 to 19 with one layer. Accordingly, it is understood that, in this case, the initially determined cluster is expressed using six bits, on the other hand, each of the remaining clusters can be expressed using two bits, and thereby, the total precoding matrices can be notified using 12 bits (6 +2 x 3), enabling to reduce the amount of information. It is obvious that similar results can be obtained also for matrices with two layers and matrices with three layers.

Consequently, in a case where a precoding matrix is initially determined, the bit number required for notification of each cluster is represented in Table 2 shown below. In Table 2, the first column expresses the combination of the layer number and the codebook index of a cluster of which precoding matrix is determined initially, and the second column expresses the bit number required for notification of the precoding matrices of the other clusters.

Table 2

| (Layer Number, Codebook Index) | Necessary Bit Number |
|---|---|
| (1, 0~15) | 4 |
| (1, 16~19) | 2 |
| (1, 20~23) | 2 |
| (2, 0~15) | 4 |

Regarding for which cluster the precoding matrix should be determined initially, a cluster that achieves the precoding gain most may be selected, or simply a cluster with low or high frequency may be selected. In addition, if codebook indexes 16 to 19 with one layer and codebook indexes 20 to 23 with one layer are used simultaneously, effects of FSTD (Frequency Switched Transmit Diversity) can be expected, and thereby, they may be collectively expressed as codebook indexes 16 to 23 with one layer using three bits.

As described above, in the present invention, in consideration of the relationship between precoding matrices between clusters, the amount of control information required for frequency selective precoding is reduced. In this specification, a base station apparatus on the premise of frequency domain equalization has been described, but, the situation is essentially the same as the situation of a case where another reception method, such as turbo equalization or time domain equalization, is used. Further, each cluster is determined after the frequency allocation determination unit 7, but frequency allocation may be preliminarily determined after calculating the optimum precoding matrix of each of the clusters in the entire system bands. Furthermore, since the essence of the present invention is to compact the amount of control information in determining the precoding matrix for each cluster, allocation and determination of the precoding matrix may be performed by other methods.

Second Embodiment

A second embodiment is embodied for the purpose of reducing the amount of information further, in which the frequency correlation between clusters is utilized to achieve further reduction. As described in the first embodiment, when the precoding matrix of one cluster is determined, by further utilizing the frequency correlation between channels, the amount of control information can be reduced. For example, in Table 1, if the precoding matrix selected for one cluster is codebook index 0 with one layer, a precoding matrix of which chordal distance is near the chordal distance of codebook index 0 with one layer is much more likely to be selected as the precoding matrix for the neighboring cluster having a nearest frequency. As described above, by further limiting the precoding matrix to be allocated for a cluster of which frequency is nearest to the frequency of one cluster on the premise of closeness of distance, the amount of control information can be reduced further. Generally, by applying a precoding matrix to the gain obtained by superposition of sine wave, the gain is represented as a beam pattern, and the chordal distance is the index representing the distance of the chord of the beam pattern, and mathematically calculated using Frobenius norm.

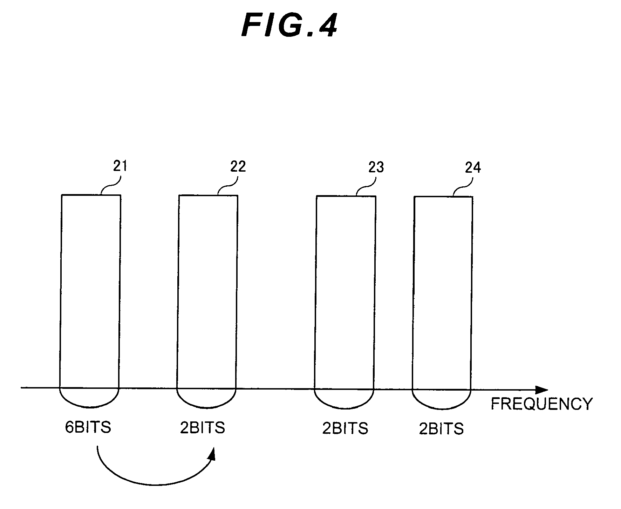

Fig. 4 is a conceptual view illustrating one example in a second embodiment of the present invention, where the amount of information of a precoding matrix is reduced. Here, in a case where the number of clusters is designated as four, if the precoding matrix selected for first cluster 21 is designated as codebook index 0 with one layer, for second cluster 22 having a nearest frequency, codebook index 0 with one layer or a precoding matrix with one layer having a close chordal distance is much more likely to be selected. For example, as matrices having closest chordal distance to that of codebook index 0 with one layer, two kinds of precoding matrices are selected from among codebook indexes 1 to 15 with one layer except for codebook index 0 with one layer (since only codebook indexes 0 to 15 with one layer can be candidates of selection, like the first embodiment, the number of selectable precoding matrices is reduced.).

In this case, since three kinds of matrices: codebook index 0 with one layer and two precoding matrices each having a close chordal distance, can be selected, they can be notified using two bits. As a result, the amount of control information becomes 12 (6 + 2 x 3) bits for a case of four clusters, and thus, the amount of control information can be reduced significantly. Here, although the precoding matrix for a cluster in a frequency direction is expressed by difference based on the chordal distance using two bits, arbitrary number of bits may be used depending on requirement for the size of the codebook or degree of improvement of transmission performances. In case of three bits, it is obvious that the kinds of precoding matrices are limited to be not more than eight (five or seven) kinds including the same precoding matrix and remaining matrices each having a close chordal distance, and the same view is possible for other cases regardless of the number of bits. Therefore, according to the present invention, when the precoding matrix is selected from codebooks, the amount of control information can be reduced further.

The program operating in a mobile station apparatus and a base station apparatus according to the present invention, is a program for controlling CPU etc. (for causing a computer to function), so as to realize functions of the above described embodiments. Information dealt with in these apparatuses is temporarily saved on RAM during processing it, after that it is stored on various kinds of ROMs or HDD, and if necessary, it is subjected to reading-out, modifying and writing-in by CPU. As recording media for storing the program, any kinds of media including semiconductor media (such as, ROM and a nonvolatile memory card), optical recording media (such as, DVD, MO, MD, CD, and BD), and magnetic recording media (such as, a magnetic tape and a flexible disk) may be used. Further, the functions of above described embodiments are realized not only by executing the loaded program, but also by processing in cooperation with an operating system or other application programs etc. based on the direction of the program in some cases.

Industrial Applicability

Furthermore, when circulating the program in markets, the program can be circulated by being stored on a portable recording medium, or transferred to a server computer connected via a network such as the Internet. In this case, the memory device of the server computer is also included in the present invention. Moreover, embodying the program may be achieved by making a portion or the whole of the mobile station apparatus and the base station apparatus of the above described embodiments as LSI that is typically an integrated circuit. The functional blocks of the mobile station apparatus and the base station apparatus may be made into chips individually, or they may be made into chips by integrating a portion or the whole of them. Also, the method for achieving an integrated circuit is not limited to a method of making LSI, instead, a method of making a dedicated circuit or a method of using a general purpose processor may also be used. Further, when technology for making an integrated circuit replacing an LSI emerges due to progress of semiconductor technology, it is also possible to use an integrated circuit by this technology.

As mentioned above, although the embodiments of the present invention are described in detail with reference to drawings, specific configurations are not limited to the embodiments, instead, a design etc. not deviating from gists of the present invention is also included in the claims.

Description of Symbols

| | |
|---|---|
| 1-1, 1-2 | receiving antenna |
| 2-1, 2-2 | radio unit |
| 3-1, 3-2 | A/D unit |
| 4-1, 4-2 | CP removal unit |
| 5-1, 5-2 | reference signal separation unit |
| 6 | channel estimation unit |
| 7 | frequency allocation determination unit |
| 8 | precoding matrix selection unit |
| 9 | PMI compression unit |
| 10 | transmission unit |
| 11-1, 11-2 | FFT unit |
| 12 | equalizer |
| 13 | demodulation unit |
| 14 | decoding unit |
| 21 - 24 | cluster |
| 101 | coding unit |
| 102 | modulation unit |
| 103 | DFT unit |
| 104 | receiving antenna |
| 105 | reception unit |
| 106 | precoding matrix detection unit |
| 107 | precoding unit |
| 108-1, 108-2 | IFFT unit |
| 109-1, 109-2 | reference signal generation unit |
| 110-1, 110-2 | reference signal multiplexer |
| 111-1, 111-2 | CP insertion unit |
| 112-1, 112-2 | D/A unit |
| 113-1, 113-2 | radio unit |
| 114-1, 114-2 | transmitting antenna |

**Claims**

1. A radio transmitter which divides a frequency signal into a plurality of clusters, arranges each of the divided clusters on a frequency domain and multiplies each of the clusters arranged on the frequency domain by a precoding matrix, wherein
   the number of precoding matrices to be selected is limited based on the relationship between a precoding matrix to be multiplied to any of the clusters and a precoding matrix to be multiplied to any of the other clusters.

2. The radio transmitter according to claim 1, wherein
   the number of precoding matrices to be selected is limited based on the relationship between a precoding matrix to be multiplied to any one of the clusters and a precoding matrix to be multiplied to another cluster neighboring thereto.

3. The radio transmitter according to claim 1, wherein
   the number of precoding matrices to be selected is limited based on frequency correlation between any one of the clusters and another cluster neighboring thereto.

4. A radio transmitter comprising a plurality of transmitting antennas, for performing frequency selective precoding to transmit a radio signal,
   wherein,
   the amount of information for notifying a destination of a precoding matrix multiplied to any one of clusters is made smaller than the amount of information for notifying the destination of a precoding matrix multiplied to any of the other clusters.

5. The radio transmitter according to claim 4, wherein,
   the amount of information for notifying the destination of the precoding matrix is determined according to a chordal distance.

6. A base station apparatus comprising the radio transmitter according to any of claims 1 to 5.

7. A radio transmission method which divides a frequency signal into a plurality of clusters, arranges each of the divided clusters on a frequency domain and multiplies each of the clusters arranged on the frequency domain by a precoding matrix, at least comprising the steps of:

   specifying the relationship between a precoding matrix to be multiplied to any of the clusters and a precoding matrix to be multiplied to any of the other clusters; and
   limiting the number of precoding matrices to be selected based on the relationship.

8. A control program of a base station apparatus, which divides a frequency signal into a plurality of clusters, arranges each of the divided clusters on a frequency domain and multiplies each of the clusters arranged on the frequency domain by a precoding matrix, wherein
   the control program converts a series of processing into commands so as to enable a computer to read and execute them, the series of processing including processing of:

   specifying the relationship between a precoding matrix to be multiplied to any of the clusters and a precoding matrix to be multiplied to any of the other clusters; and
   limiting the number of precoding matrices to be selected based on the relationship.

9. An integrated circuit, when mounted on a radio transmitter, causing the radio transmitter to perform a plurality of functions, wherein
   the integrated circuit causing the radio transmitter to perform functions of:

   specifying the relationship between a precoding matrix to be multiplied to any of the clusters and a precoding matrix to be multiplied to any of the other clusters; and
   limiting the number of precoding matrices to be selected based on the relationship.

# FIG.1

EP 2 536 045 A1

# FIG.2

21  22  23  24

6BITS  6BITS  6BITS  6BITS

FREQUENCY

# FIG.3

21 22 23 24

6BITS    4BITS    4BITS    4BITS

FREQUENCY

# FIG.4

21    22    23    24

6BITS    2BITS    2BITS    2BITS

FREQUENCY

## FIG.5

EP 2 536 045 A1

<table>
<tr><td colspan="2" align="center">**INTERNATIONAL SEARCH REPORT**</td><td colspan="2">International application No.<br>PCT/JP2010/072934</td></tr>
<tr><td colspan="4">A.   CLASSIFICATION OF SUBJECT MATTER<br>*H04J11/00*(2006.01)i, *H04L27/01*(2006.01)i<br><br><br>According to International Patent Classification (IPC) or to both national classification and IPC</td></tr>
<tr><td colspan="4">B.   FIELDS SEARCHED</td></tr>
<tr><td colspan="4">Minimum documentation searched (classification system followed by classification symbols)<br>H04J11/00, H04L27/01<br><br><br></td></tr>
<tr><td colspan="4">Documentation searched other than minimum documentation to the extent that such documents are included in the fields searched<br>   Jitsuyo Shinan Koho         1922-1996   Jitsuyo Shinan Toroku Koho   1996-2011<br>   Kokai Jitsuyo Shinan Koho   1971-2011   Toroku Jitsuyo Shinan Koho   1994-2011</td></tr>
<tr><td colspan="4">Electronic data base consulted during the international search (name of data base and, where practicable, search terms used)<br>   CiNii<br><br></td></tr>
</table>

C.   DOCUMENTS CONSIDERED TO BE RELEVANT

| Category* | Citation of document, with indication, where appropriate, of the relevant passages | Relevant to claim No. |
|---|---|---|
| Y<br>A | WO 2008/131352 A1  (INTERDIGITAL TECHNOLOGY<br>CORP.),<br>30 October 2008 (30.10.2008),<br>paragraphs [00107], [00108]<br>& JP 2010-525684 A      & EP 2147516 A<br>& CN 101689962 A        & MX 2009011299 A<br>& AR 66220 A            & CA 2684874 A<br>& KR 10-2009-0130206 A   & KR 10-2010-0017117 A<br>& IL 201649 D | 1,2,4,6-9<br>3,5 |
| Y<br>A | Osamu NAKAMURA, Yosuke AKIMOTO, Kazunari<br>YOKOMAKURA, Jungo GOTO, Hiroki TAKAHASHI,<br>Yasuhiro HAMAGUCHI, "Clustered DFT-S-OFDM ni<br>Okeru Shuhasu Sentaku Precoding ni Kansuru<br>Kento", Technical report of IEICE. RCS, 17<br>December 2009 (17.12.2009), RCS2009-175,<br>vol.109, no.341, pages 49 to 54 | 1,2,4,6-9<br>3,5 |

| ☒   Further documents are listed in the continuation of Box C. | ☐   See patent family annex. |
|---|---|

| * Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
|---|---|

| Date of the actual completion of the international search<br>   28 January, 2011 (28.01.11) | Date of mailing of the international search report<br>   08 February, 2011 (08.02.11) |
|---|---|
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/072934 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | Sharp, "Considerations on multiple precoding scheme for clustered DFT-S-OFDM", 3GPP TSG RAN WG1 Meeting #58bis, R1-094029, 2009.10.16 | 1,2,4,6-9<br>3,5 |
| A | JP 2009-536805 A  (Inter Digital Technology Corp.),<br>15 October 2009 (15.10.2009),<br>paragraph [0006]<br>& US 2007/0265037 A1     & EP 2022227 A<br>& WO 2007/133564 A2     & AR 60988 A<br>& KR 10-2009-0008466 A   & KR 10-2009-0014370 A<br>& CN 101444056 A | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP, TR36.814,* December 2009, vol. 5.1

- Consideration on frequency selective precoding in Clustered DFT-S-OFDM. **NAKAMURA et al.** TECHNICAL REPORT OF IEICE. THE INSTITUTE OF ELECTRONICS, INFORMATION AND COMMUNICATION ENGINEERS, December 2009